# EUROPÄISCHE PATENTSCHRIFT

(11) **EP 2 763 256 B1**
(45) Veröffentlichungstag und Bekanntmachung des Hinweises auf die Patenterteilung: **07.04.2021**
(21) Anmeldenummer: 13196086.6
(22) Anmeldetag: 06.12.2013
(51) Int. Cl.: B61F 1/00, H02G 3/22, H02G 3/08

(54) **Kabelkanal mit Durchgangsabschluss, Bausatz für einen Durchgangsabschluss und Verfahren zum Montieren eines Durchgangsabschlusses für einen Kabelkanal**
Cable ducts with feed-through terminal, kit for a feed-through terminal and method for mounting a feed-through terminal for a cable duct
Canal de câbles avec passage de paroi, kit de passage de paroi et procédé de montage d'un passage de paroi pour un canal de câbles

(30) Priorität: 01.02.2013 DE 102013101059
(43) Veröffentlichungstag der Anmeldung: 06.08.2014
(73) Patentinhaber: Bombardier Transportation GmbH, 10785 Berlin (DE)
(72) Erfinder: Glomb, Christian, 16766 Kremmen (DE); Mache, Jörg, 16775 Löwenberger Land (DE)
(74) Vertreter: Zimmermann & Partner Patentanwälte mbB

(56) Entgegenhaltungen:
- EP-A1- 0 557 896
- WO-A1-93/22815
- WO-A1-2007/097706
- AU-A1- 2008 221 569
- DE-A1- 19 757 041
- GB-A- 2 181 902
- US-A- 4 376 230
- US-B1- 8 051 614

## Beschreibung

### Technisches Gebiet

Die Erfindung liegt auf dem Gebiet der Verkabelung insbesondere in Schienenfahrzeugen, bei denen Kabel in Kabelkanälen verlegt werden. Die Erfindung betrifft auch einen Bausatz für einen Durchgangsabschluss für einen Kabelkanal. Weiterhin betrifft die Erfindung ein Verfahren zum Montieren eines Durchgangsabschlusses für einen Kabelkanal.

### Vorbekannter Stand der Technik

Kabelkanäle, Durchgangsabschlüsse und Eingänge für Kabelkanäle werden in weiten Bereichen eingesetzt, nämlich überall dort, wo mechanische Bauteile zum Abdichten und sicheren Führen von elektrischen Leitungen gefragt sind. Insbesondere im Bereich des Schienenfahrzeugbaus ergeben sich dabei besondere Anforderungen. Zum Beispiel werden Leitungsverlegungen im Unterflurbereich eines Schienenfahrzeugs oft mit geschlossenen Kabelkanälen realisiert.

Durch die Unterbringung einer steigenden Anzahl von sicherheitstechnischen Systemen und Baugruppen im Schienenfahrzeug, und der sich daraus ergebenden Gesamtmassenproblematik, ist es vor allem in den letzten Jahren zunehmend erwünscht, auch in der Leitungsverlegung Leichtbaukomponenten zu verwenden. Auch führt die Vielzahl der unterzubringenden Systeme zu kleineren Einbauräumen für die einzelnen Gewerke und somit auch zu weniger Raum für die elektrische Leitungsverlegung.

Zudem sind durch neue Sicherheitsvorschriften die Sicherheitsvorkehrungen, zum Beispiel im Brandschutz, gestiegen. Aber nicht nur die Anforderungen an die Sicherheit sind gestiegen, sondern auch die Kundenanforderungen, insbesondere im Bereich des Personenschienenverkehrs. Gerade bei Hochgeschwindigkeitszügen sind die Kundenanforderungen beispielsweise besonders im Bereich des Drehgestells sehr hoch. Dies wirkt sich auch auf die Kabelverlegung aus.

Aus den oben genannten Gründen wird zum Beispiel Wert auf eine steinschlaggeschützte, geschlossene Leitungsverlegung gelegt und eine wintertaugliche Leitungsverlegung gefordert. Die Verwendung der sich daraus ergebenden geschlossenen Kabelkanäle für die Leitungsverlegung erfordert auch einen geschlossenen Kabelkanaleingang. Gleichzeitig sollte aber die Leitungsführung innerhalb und außerhalb des Kabelkanaleingangs individuell gestaltbar sein, insbesondere abgestimmt auf die zu verlegende Leitungsmenge und die Leitungskategorien.

Konventionelle Lösungen der oben beschriebenen Probleme beinhalten zum Beispiel die Verlegung in Schutzschlauchsystemen, in denen der Leitungseingang in den Schutzschlauch über eine entsprechende Verschraubung mit Dichteinsatz realisiert wird. Es kommen auch geschlossene Kabelkanäle mit Flanschplatte und mehreren Kabelverschraubungen in Schienenfahrzeugen zum Einsatz. Geteilte Flanschplatten mit Dichteinsatz sind für die Verlegung vorkonfektionierter Leitungen ebenfalls in Verwendung, sind aber in der Größe stark begrenzt.

Aus der US 3,282,544 ist ein Durchführungsrahmen für elektrische Kabel beschrieben. Dabei besteht der Rahmen aus zwei Teilen, in die, je nach gefragter Anwendung, Blöcke aus Dichtmaterial gelegt werden können. Die Dichtblöcke bestehen aus einer Art Halbschale, in die Kabel gelegt werden können. Für unterschiedliche Kabeldurchmesser werden verschiedene Dichtblöcke zur Verfügung gestellt. Wenn das erste Rahmenteil mit den Blöcken aus Dichtmaterial gefüllt ist, wird mittels Schraubverbindung das zweite Rahmenteil mit dem ersten Rahmenteil verbunden. Beim Verbinden der Rahmenteile werden die Dichtblöcke zusammengepresst. Der Pressdruck kann noch durch Keilspreizelemente erhöht werden.

Die US 4,771,136 beschreibt eine Wanddurchführung für Kabel, die die Effekte von elektromagnetischen Pulsen reduzieren soll. Blöcke aus einem elektrisch leitenden Material werden, ähnlich wie bei der US 3,282,544, in einem Rahmen angeordnet. Zusätzliche Trennplatten zwischen den Reihen der Blöcke sorgen dafür, dass die Blöcke zuverlässig an dem für sie bestimmten Ort bleiben. Um in jedem Fall einen ausreichenden Kontakt zu den Kabeln herstellen zu können, sind die Blöcke mit Rippen ausgestattet.

Die WO 2010/090586 A1 beschreibt ebenfalls einen Rahmen für einen Wanddurchgang. Der Rahmen wird mit Dichtblöcken gefüllt, durch die Kabel geführt werden können, und die Blöcke werden mittels Halteplatten in der gewünschten Position gehalten. Die Öffnungen für die Kabel in den Blöcken beinhalten abziehbare Schichten, so dass die Größe der Öffnungen an das jeweilige Kabel einfach angepasst werden kann. Die US 4 376 230 A beschreibt einen Kabelkanal mit hohlem Körper. Die DE 197 57 041 A1 beschreibt ein Gehäuse mit EMV-geschirmter Kabeldurchführung. Die WO 93/22815 A1 beschreibt eine Kabeldurchführung mit Erdung. Die EP 0 557 896 A1 beschreibt eine Kabeldurchführung für EMV-dichte Schränke. Die GB 2 1841 902 A beschreibt eine Buchsenanordnung für eine Schottwand. Die WO 2007/097706 A1 beschreibt einen Kompressionsindikator in einem Rahmen US 8 051 614 B1 beschreibt eine intumeszierende Struktur als hermetische Barriere innerhalb eines Faserkanals.

### Nachteile des Standes der Technik

Bei den bekannten Systemen sind die Dichtrahmen durch die Verwendung sehr steifer und harter Dichtmaterialien sehr robust, aber auch sehr schwer. Außerdem erfordern die oben beschriebenen Systeme zusätzliche Klemmteile, wie zum Beispiel Druck- und Überwurfmuttern bei Verschraubungen oder entsprechende Keilspreizelemente bei Kabeldurchführungen. Dabei müssen vor allem die Keilspreizelemente aufwendig montiert werden, wodurch bei der Montage auch mehr Montagefreiraum benötigt wird.

Außerdem behandeln die oben beschriebenen Systeme Wanddurchgänge von Kabeln, die wegen der genannten Sicherheits- und Kundenanforderungen nicht für die Verwendung im Unterflurbereich eines Schienenfahrzeugs verwendet werden können.

### Problemstellung

Es ist daher Aufgabe der vorliegenden Erfindung, einen Kabelkanal mit Durchgangsabschluss zur Verfügung zu stellen, der eine Leitungsverlegung mit vorkonfektionierten Leitungen erlaubt, platzsparend montiert werden kann, und ein möglichst geringes Gewicht aufweist. Außerdem soll der Kabelkanal mit dem Durchgang die kundenspezifischen und sicherheitsrelevanten Anforderungen im Bereich Schienenfahrzeuge erfüllen. Es ist auch Aufgabe der Erfindung, eine gute und leicht zu montierende Befestigung des Durchgangs am Kabelkanaleingang bereit zu stellen.

### Erfindungsgemäße Lösung

Diese Aufgabe wird durch einen Kabelkanal mit einem Durchgangsabschluss nach Anspruch 1, einen Bausatz nach Anspruch 12, sowie ein Verfahren zum Montieren eines Durchgangsabschlusses für einen Kabelkanal nach Anspruch 14 gelöst. Weitere Ausführungsformen, Modifikationen und Verbesserungen ergeben sich anhand der folgenden Beschreibung und gemäß den beigefügten Ansprüchen.

Gemäß einer Ausführungsform wird ein Kabelkanal mit wenigsten einem Durchgangsabschluss für wenigstens ein Kabel an einem offenen Ende des Kabelkanals bereitgestellt. Der Durchgangsabschluss umfasst einen Dichtungspressrahmen, eine am Dichtungspressrahmen befestigbare Halterung zum Fixieren des Kabels am Durchgangsabschluss, und eine vom Dichtungspressrahmen gehaltene Dichtung aus einem bevorzugt weichen Dichtungsmaterial mit mindestens einer Dichtungsöffnung, durch welche das Kabel hindurch treten kann und welche den Innenraum des Kabelkanals an dessen offenen Ende abdichtet; wobei die Halterung eine Fixierung des Kabels relativ zur Dichtungsöffnung gestattet.

Durch die Fixierung der Kabel an der Halterung ist es möglich, die Dichtfunktion von der Haltefunktion zu trennen. Mit der Ausgestaltung des Durchgangsabschlusses gemäß Ausführungsformen der Erfindung werden die Kabel nicht mehr - wie bisher bekannt - durch die Pressung des Dichtmaterials kraftschlüssig gehalten, sondern durch die zusätzlich angebrachte Halterung zur Fixierung der Kabel. Vorteilhaft ist dabei, dass die Halterung die an den Kabeln auftretenden Kräfte aufnimmt. Die auf die Kabel wirkenden Kräfte (zum Beispiel Querkräfte) werden somit an der Dichtung vorbeigeleitet. Die Dichtung hat in dem erfindungsgemäßen Durchgangsabschluss lediglich eine Dichtfunktion, und trägt praktisch nur noch wenig bis gar nicht zur Fixierung der Kabel bei. Dadurch ist es möglich, ein leichtes und weicheres Dichtmaterial zu verwenden, das für eine Haltefunktion zu instabil wäre. Das leichte und weiche Dichtmaterial erfordert nur eine geringe aufzuwendende Anpresskraft, um die gewünschte Dichtfunktion bereit zu stellen. Dies gestattet wiederum, den Dichtungspressrahmen schwächer zu dimensionieren und mit geringerem Gewicht herzustellen. Insgesamt kann so eine Leichtbaugestaltung des Durchgangsabschlusses für einen Kabelkanal realisiert werden.

Durch die Trennung der Halte- und Dichtfunktion und die Verteilung der beiden Funktionen auf jeweils unterschiedliche Bauteile ist eine zentrierte, d.h. koaxiale, Position der Kabel trotz Leichtbauweise möglich. Außerdem erlaubt der erfindungsgemäße Aufbau eine Montage, deren benötigter Montagefreiraum nur vom Platzbedarf der Kabelbünde abhängig ist, aber nicht von weiteren Elementen, wie zum Beispiel von Keilspreizelementen. Bisher musste bei der Dimensionierung der Umgebung des Kabelkanals auf den Montagefreiraum Rücksicht genommen werden, da zusätzliche Presselemente nur durch einen entsprechend großen Montagefreiraum eingefügt werden können. Außerdem musste für zusätzlichen Raum in axialer und radialer Richtung für die erforderlichen Werkzeuge zum Abdichten der Kabel gesorgt werden. Bei Kabelkanälen nach Ausführungsformen der Erfindung ist der Montagefreiraum nur von dem Platzbedarf der Kabel und des Dichtungspressrahmens des Durchgangsabschlusses abhängig. Damit entfällt eine großräumige Anpassung der Umgebung des Kabelkanals.

In einer Ausführungsform umfasst der Durchgangsabschluss weiterhin eine oder zwei Fixierstangen, die am Dichtungspressrahmen befestigt sind und als Führung für die Halterung dienen. Die Halterung für Kabel ist damit in Bezug zur Fixierstange justierbar. Dadurch wird eine gewisse Flexibilität gewährleistet, was die Anordnung der Halterung, der Kabel an der Halterung, und der Dichtung betrifft. Zum Beispiel kann durch die justierbare Halterung die Position der Halterung an die Position der herangeführten Kabel angepasst werden. Auch wird durch die individuell verstellbare Halterung die zentrische Führung der Leitungen im weichen Dichtmaterial gewährleistet, da der Abstand der Halterung zu den Kabeln einfach einstellbar ist.

In einer weiteren Ausführungsform ist die Position der Halterung relativ zum Dichtungspressrahmen mittels der Fixierstange oder der Fixierstangen bevorzugt stufenlos einstellbar. Dies erhöht zusätzlich die Flexibilität und erlaubt eine nahezu beliebige Wahl der Position der Halterung in Bezug auf den Dichtungspressrahmen des Durchgangsabschlusses.

In einer Ausführungsform umfasst die Halterung mindestens einen Finger, der sich parallel zu der Längsachse der Dichtungsöffnung erstreckt und an dem das Kabel koaxial zu der ihm zugeordneten Dichtungsöffnung festlegbar ist. Der Finger kann durch beispielsweise T- förmige Aussparungen in der Halterung gebildet werden. Dadurch kann die Fixierung der Kabel an der Halterung realisiert werden und gleichzeitig eine leichte Konstruktion des Durchgangsabschlusses erreicht werden. Außerdem kann die Größe der offenen T-Formen entsprechend der Kabelbünde angepasst werden, um eine ausreichende Fixierung zur Verfügung zu stellen. Typischerweise umfasst die Halterung mehrere zueinander parallele Finger, die jeweils ein breites freies Ende und einen im Vergleich dazu schmaleren Bereich in Richtung zum festen Ende des Fingers aufweisen. Das breitere freie Ende der Finger stellt sicher, dass beispielsweise um die Finger gewickelte Kabelbinder zum Festlegen der Kabel nicht über das freie Ende rutschen können.

Gemäß einer Ausführungsform der hierin beschriebenen Erfindung umfasst die Dichtung mindestens zwei Dichtungsöffnungen mit unterschiedlichen Durchmessern, wobei die zur Halterung weisenden Seiten der mindestens zwei Dichtungsöffnungen im Wesentlichen in einer durch die Halterung definierten Ebene liegen. Die zur Halterung weisenden Seiten der Durchgangsöffnungen fluchten somit zueinander. Dies gilt auch bei Durchgangsöffnungen unterschiedlicher Größe. Da die Durchgangsöffnungen einseitig, nämlich zur Halterung hin, ausgerichtet werden und bevorzugt mit der Halterung fluchten, können die Kabel bündig an der Halterung anliegen und gleichzeitig zentrisch zu den Dichtungsöffnungen ausgerichtet sein. Die Kabel werden somit nicht verbogen und pressen die Dichtung nicht einseitig.

Insgesamt kann durch diese Anordnung eine zentrische Fixierung der Kabel in den Dichtungsöffnungen bereitgestellt werden und der Abstand der Kabel zur Halterung gleich gehalten werden. Die so ermöglichte Fixierung der Kabel erlaubt die Verwendung von weichem Dichtungsmaterial, da ansonsten auf die Kabel einwirkende Querkräfte zu Spalten zwischen Dichtung und Kabel führen können.

In einer Ausführungsform ist der Dichtungspressrahmen zweiteilig und umfasst ein erstes, beispielsweise ein oberes Rahmenteil und ein zweites, beispielsweise unteres Rahmenteil. Durch den geteilten Dichtungspressrahmen der beschriebenen Ausführungsform ist es nicht mehr nötig, zusätzliche Klemmteile zur Pressung des Dichtmaterials vorzusehen, wie dies im Stand der Technik der Fall ist, sondern die Komprimierung des Dichtmaterials findet in ausreichendem Maße durch die Montage des zweiten Rahmenteils statt. Diese Komprimierung durch das zweite Rahmenteil ist deshalb ausreichend, da die Fixierung der Kabel über die Halterung und nicht über die Dichtung bereitgestellt wird. Zudem ist die Montage des Durchgangsabschlusses mit geteiltem Dichtungspressrahmen einfach durchzuführen.

Gemäß einer Ausführungsform der Erfindung sind die Rahmenteile als Blechprofile gestaltet. Durch die ermöglichte Verwendung eines weichen Dichtmaterials (wie oben beschrieben), insbesondere im Vergleich zu den bisher verwendeten harten Dichtungen, ist es praktikabel, einen leichten Dichtungspressrahmen aus dünnem Blech für den Durchgangsabschluss zu verwenden. Zusätzlich zu den Vorteilen des geringen Gewichts, die ein dünner Blechrahmen mit sich bringt, ist ein weiterer Vorteil die Kosteneinsparung bei der Herstellung des Dichtungspressrahmens aus einfachen Blechteilen.

Je nach Dimensionierung (Höhe x Breite) des Dichtungspressrahmens kann die Materialstärke der Blechteile im Bereich von Dünnblechen zwischen etwa 1,0 mm bis etwa 2,0 mm liegen.

In einer erfindungsgemäßen Ausgestaltung des Durchgangsabschlusses in dem Kabelkanal ist das zweite Rahmenteil ausgebildet, die Dichtung entlang der Fixierstange zu komprimieren. Durch die Komprimierung des Dichtmaterials von unten wird eine Montage von unten ermöglicht. Außerdem wird durch die Teilung des Dichtungspressrahmens und das Pressen der Dichtung von unten ein Schichtaufbau der Bauteile des Durchgangsabschlusses von unten möglich, was gerade im Unterflurbereich eines Schienenfahrzeugs mit entsprechender Zugänglichkeit von unten von großem Vorteil ist.

Gemäß einer Ausführungsform ist die Dichtung zweiteilig ausgeführt und umfasst ein erstes Dichtungsteil und ein zweites Dichtungsteil, wobei die Dichtungsöffnung oder die Dichtungsöffnungen durch etwa halbschalige Vertiefungen in dem ersten und zweiten Dichtungsteil ausgebildet sind, die beim Zusammenfügen der beiden Dichtungsteile jeweils eine Dichtungsöffnung bilden.

Die Dichtung ist geteilt und besteht im einfachsten Fall aus zwei Halbschalen. Das Kabel muss daher nicht durch die Dichtungsöffnung gefädelt werden, sondern wird einfach in die bereits in den Dichtungspressrahmen eingelegte Halbschale eingelegt. Die zweite Halbschale wird dann auf das eingelegte Kabel gelegt, sodass die beiden Halbschalen das Kabel radial vollständig umgeben. Bei mehreren Kabeln weisen die beiden Dichtungsteile eine entsprechende Anzahl von etwa halbschaligen Vertiefungen auf, typischerweise für jedes Kabel eine. Auch hier wird das erste Dichtungsteil in den Dichtungspressrahmen eingeführt und dann die Kabel in die entsprechenden Vertiefungen eingelegt. Die Kabel werden dann geeignet an der Halterung befestigt, wobei bevorzugt jedes Kabel an einem Finger der Halterung festgelegt wird. Die Lage der Finger und die Lage der Vertiefungen in den Dichtungsteilen sind bevorzugt aufeinander abgestimmt, sodass die an den Fingern festgelegten Kabel zentrisch zu den Vertiefungen, bzw. den sich daraus ergebenen Durchgangsöffnungen, angeordnet sind. Abschließend wird dann das zweite Dichtungsteil mit seinen Vertiefungen voran zur Vervollständigung der Dichtung auf die eingelegten Kabel aufgesetzt.

Gemäß einer Ausführungsform werden die Rahmenteile mittels der einen oder zwei Fixierstangen zusammengehalten und sind relativ zueinander bewegbar, um die Dichtung zwischen ihnen zu komprimieren.

Die Fixierstangen erfüllen damit mehrere Funktionen. Zum einen gestatten sie eine Justage der Halterung relativ zum Dichtungspressrahmen und damit zu den Dichtungen und zum anderen werden die beiden Rahmenteile zusammengehalten und pressen die Dichtungen. Die Presskraft kann mittels der Justierstangen eingestellt werden.

Gemäß einer Ausführungsform des Durchgangsabschlusses weist das Dichtungsmaterial eine Dichte von ungefähr 200 kg/m³ bis ungefähr 350 kg/m³, bevorzugt von ungefähr 200 kg/m³ bis ungefähr 250 kg/m³ auf. Dies begünstigt die gewünschte Leichtbauweise des Kabelkanals. Es ist ebenfalls möglich, Dichtungsmaterial mit einer Dichte von ungefähr 260 kg/m³ oder 280 kg/m³ bis ungefähr 325 kg/m³ oder 350 kg/m³ zu verwenden.

Gemäß einer weiteren Ausführungsform des Durchgangsabschlusses weist das Dichtungsmaterial einen Kompressionswiderstand von ungefähr 30 kPa bis ungefähr 91 kPa, bevorzugt von ungefähr 30 kPa bis ungefähr 65 kPa auf. Dies begünstigt die oben ausgeführte Verwendung einfacher Blechteile für die Komprimierung des Dichtmaterials. Es ist ebenfalls möglich, Dichtungsmaterial mit einem Kompressionswiderstand von ungefähr 39 kPa oder 42 kPa bis ungefähr 84 kPa oder 91 kPa zu verwenden.

Als Dichtungsmaterial kann beispielsweise ein Silikonelastomer verwendet werden. Silikonelastomere eignen sich auch zur Abdichtung anderer Bereiche des Durchgangsabschlusses. Das Dichtungsmaterial kann vorzugsweise geschäumt sein bzw. eine Schaumstoffdichtung sein. Dadurch werden die Nachgiebigkeit des Dichtungsmaterials und damit dessen Dichtwirkung noch weiter verbessert, insbesondere im Vergleich zu üblicherweise verwendeten massiven Dichtungen. Weitere geeignete Dichtungsmaterialen basieren auf anderen synthetischen Kautschuken wie beispielsweise EPDM (Ethylen-Propylen-Dien-Kautschuk). Diese können ebenfalls geschäumt sein, beispielsweise geschäumtes EPDM.

In einer Ausführungsform des hierein beschriebenen Durchgangsabschlusses ist die Fixierstange als Gewindestange ausgebildet. Dies ermöglicht sowohl eine kostengünstige als auch einfache Realisierung der einstellbaren Halterung.

In einem weiteren Aspekt wird ein Bausatz für einen Durchgangsabschluss eines Kabelkanals bereitgestellt. Der Bausatz umfasst mindestens die folgenden Elemente: einen Dichtungspressrahmen, der an ein offenes Ende des Kabelkanals montierbar oder integral mit diesem verbunden ist; eine zweischalige Dichtung aus einem weichen Dichtungsmaterial zum Einsetzen in den Dichtungspressrahmen, um dort im zusammengesetzten Zustand mindestens eine Dichtungsöffnung zu bilden, durch welche ein Kabel hindurchtreten kann, wobei die Dichtung das offene Ende des Kabelkanals abdichtet; mindestens eine am Dichtungspressrahmen des Durchgangsabschlusses montierbare Fixierstange; und eine mittels der Fixierstange am Dichtungspressrahmen befestigbare Halterung zum Fixieren des Kabels am Durchgangsabschluss relativ zu der Dichtungsöffnung, wobei die Fixierstange eine stufenlose Einstellung der Position der Halterung relativ zum Dichtungspressrahmen gestattet.

Die einzelnen Elemente des Bausatzes können, wie weiter oben ausgeführt, ausgebildet sein.

In einer weiteren Ausführungsform wird ein Verfahren zum Verlegen von Kabeln in einem einseitig offenen Kabelkanal, an dessen einem Ende ein Durchgangsabschluss befestigt ist, der einen Dichtungspressrahmen mit einem am Kabelkanal festgelegten ersten Rahmenteil und zumindest eine Fixierstange aufweist, vorgeschlagen. Das Verfahren umfasst dabei zumindest folgendes: Montieren einer ersten Halterung an der Fixierstange; Einlegen eines ersten Dichtungsteils mit etwa halbschaligen Vertiefungen in den Dichtungspressrahmen; Einlegen der Kabel in die etwa halbschaligen Vertiefungen des ersten Dichtungsteils; Befestigen der Kabel an der ersten Halterung; Einlegen eines zweiten Dichtungsteils mit etwa halbschaligen Vertiefungen in den Dichtungspressrahmen, wobei das erste und zweite Dichtungsteil mit ihren jeweils etwa halbschaligen Vertiefungen zusammen eine erste Dichtung mit Durchgangsöffnungen bilden, durch welche die Kabel hindurchtreten; und Montieren eines zweiten Rahmenteils des Dichtungspressrahmens an der Fixierstange und Zusammenpressen der Dichtungsteile zwischen dem ersten und zweiten Rahmenteil durch relatives Bewegen der beiden Rahmenteile zueinander mittels der Fixierstange zum Abdichten des offenen Endes des Kabelkanals.

Gemäß einer weiteren Ausführungsform wird nach dem Einlegen des zweiten Dichtungsteils eine zweite Halterung an der Fixierstange montiert, welche die erste Dichtung gegen das erste Rahmenteil presst, wobei das Verfahren vor dem Montieren des zweiten Rahmenteils folgendes umfasst: Einlegen eines ersten Dichtungsteils einer zweiten Dichtung mit etwa halbschaligen Vertiefungen in den Dichtungspressrahmen; Einlegen weiterer Kabel in die etwa halbschaligen Vertiefungen des ersten Dichtungsteils; Befestigen der weiteren Kabel an der zweiten Halterung; Einlegen eines zweiten Dichtungsteils der zweiten Dichtung mit etwa halbschaligen Vertiefungen in den Dichtungspressrahmen, wobei das erste und zweite Dichtungsteil mit ihren jeweils etwa halbschaligen Vertiefungen zusammen die zweite Dichtung mit Durchgangsöffnungen bilden, durch welche die weiteren Kabel hindurchtreten; und Zusammenpressen der zweiten Dichtung durch Pressen des zweiten Rahmenteils gegen die zweite Halterung.

Die Erfindung kann überall dort eingesetzt werden, wo ein Durchgangsabschluss für einen Kabelkanal benötigt wird, insbesondere in Situationen, in denen der Montageplatz eingeschränkt ist. Zudem kann der Durchgangsabschluss gemäß den oben beschriebenen Ausführungsformen in Kabelkanälen für Schienenfahrzeuge, und dort insbesondere im Unterflurbereich, eingesetzt werden.

### Figuren

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu. Gleiche Bezugszeichen bezeichnen ähnliche Teile.

Figur 1 zeigt eine Zusammenbaudarstellung eines Durchgangsabschlusses für einen Kabelkanal nach einer Ausführungsform der Erfindung.

Figur 2 zeigt eine Montagedarstellung eines Durchgangsabschlusses für einen Kabelkanal nach einer Ausführungsform der Erfindung.

Figur 3 zeigt eine Ausführungsform eines Rahmenteils eines Durchgangsabschlusses für einen Kabelkanal nach einer Ausführungsform der Erfindung.

### Ausführungsbeispiele

Nachfolgend wird ein Kabelkanal mit einem Durchgangsabschluss beschrieben, dessen Konstruktion es ermöglicht, in einer Leichtbauweise ausgeführt zu werden und gleichzeitig auf einfache Weise zum Beispiel im Unterflurbereich eines Schienenfahrzeugs montiert zu werden. Dies wird durch die Anordnung und Verteilung der entsprechenden Funktionen in einem Durchgangsabschluss erwirkt, was im Folgenden beispielhaft in den Figuren beschrieben ist.

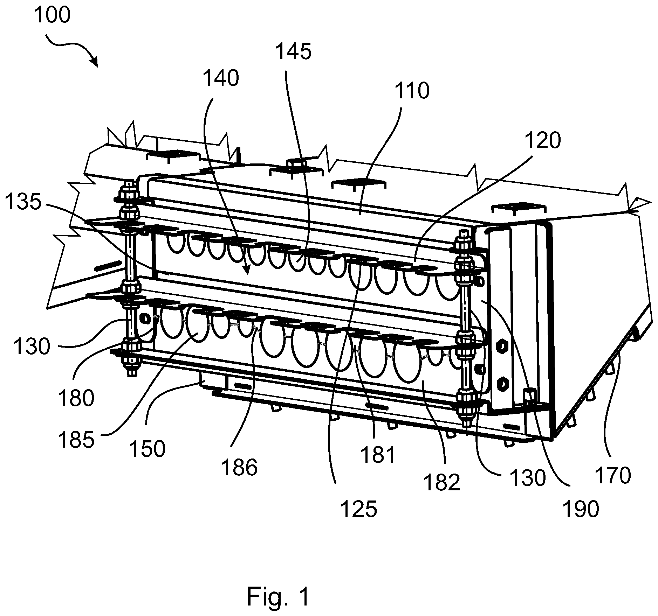

Figur 1 zeigt eine Zusammenbaudarstellung des erfindungsgemäßen Durchgangsabschlusses 100 eines Kabelkanals. Der Durchgangsabschluss weist einen Dichtungspressrahmen auf, der ein erstes Rahmenteil 110 und ein zweites Rahmenteil 150 umfasst. In einer Ausführungsform ist das erste Rahmenteil 110 als ein oberes Rahmenteil und das zweite Rahmenteil 150 als unteres Rahmenteil 150 ausgeführt. In einem Beispiel kann auch das erste Rahmenteil 110 als U-förmige Aufnahme einer Dichtung 140, 180 mit Dichtungsöffnungen 145, 185 ausgebildet sein.

Das Dichtmaterial, aus dem die Dichtung 140, 180 besteht, weist bevorzugt eine Dichte von ungefähr 200 kg/m³ bis ungefähr 250 kg/m³ auf. Dies erleichtert die gewünschte Leichtbauweise des Kabelkanals. Dabei kann das Dichtungsmaterial einen Kompressionswiderstand von ungefähr 30 kPa bis ungefähr 65 kPa aufweisen. Insbesondere Dichtmaterialien mit einem Kompressionswiderstand in diesem Bereich weisen eine günstige Weichheit auf.

Darüber hinaus kann das Dichtmaterial eine Ozonbeständigkeit entsprechend DIN EN 60811-2-1 aufweisen, wobei hier die Bewertungsstufe 0 der Prüfung nach DIN 53509-1 Ausgabe 1990 zugrunde gelegt wird und das Dichtmaterial keine Risse aufweisen sollte.

Bevorzugt ist weiterhin, wenn das Dichtmaterial eine Korrosionsbeständigkeit mit strömendem Mischgas nach DIN EN 60068-2-60, Methode 1 erfüllt, d.h. keine sichtbaren Veränderungen des zu prüfenden Dichtmaterials vorliegen.

Weiterhin ist es bevorzugt, wenn das Dichtmaterial eine klimatische Beständigkeit hinsichtlich zyklischer Temperatur- und Feuchteänderungen nach DIN EN 60068-2-38 Ausg. 06/2010 erfüllt, wobei hier 10 Zyklen a 24h zugrunde gelegt werden und nur geringe Verfärbungen zulässig sind.

Typischerweise kann der Dichtungspressrahmen integrierter Bestandteil der Außenwand eines Kabelkanals sein. Zum Beispiel kann das erste Rahmenteil 110 des Durchgangsabschlusses 100 angepasst sein, durch Verschraubung oder Verschweißung an einem Kabelkanalgehäuse befestigt zu werden. Das zweite Rahmenteil 150 kann gemäß Ausführungsformen der Erfindung nach dem Aufbau der einzelnen Elemente des Durchgangsabschlusses, wie unten näher erläutert, montiert werden. Dabei kann das zweite Rahmenteil zur Pressung der Dichtung 140, 180 verwendet werden und die Auflage für den Kabelkanalgehäusedeckel 170 an der Kabelkanaleingangsseite bilden. Außerdem kann der erfindungsgemäß gestaltete Dichtungspressrahmen durch seine zweiteilige Form durch die Pressung der Dichtung den Verschluss des Kabelkanals ermöglichen.

Am Dichtungspressrahmen sind beispielhaft zwei Fixierstangen 130 angebracht, die in einer Ausführungsform als Gewindestangen ausgebildet sein können. Die Fixierstangen 130 können als Führung für eine Halterung 120 für Kabel dienen. Zusätzlich können an den Fixierstangen 130 Montagezwischenplatten 135 zwischen einer ersten Dichtung 140 und einer zweiten Dichtung 180 vorgesehen sein, um die Stabilität der Anordnung zu fördern. Die Montagezwischenplatte kann einerseits als Montagehilfe dienen, um die erste Dichtung 140 positionieren und halten zu können, andererseits kann die Montagezwischenplatte 135 zur Versteifung des Dichtmaterials dienen, damit dieses beim Pressen nicht seitlich aus dem Dichtungspressrahmen tritt.

Typischerweise ermöglichen die als Gewindestange ausgeführten Fixierstangen 130 eine individuelle Höhenverstellung der durch die Fixierstangen geführten Elemente, wie die Halterung 120 und die Montagezwischenplatte 135. Zum Beispiel kann, wie in Figur 1 gezeigt, durch die Lage einer Sechskantmutter und durch Scheiben die Höheneinstellung der Elemente des Durchgangsabschlusses in axialer Richtung der Fixierstange 130 relativ zum Dichtungspressrahmen erfolgen.

Der Durchgangsabschluss kann in einer Ausführungsform weitere Verblendungen 190 aufweisen, die den festen Sitz der Dichtungen 140, 180 in axialer Richtung gewährleisten.

Die Dichtungen 140 und 180 können je zwei Dichtungsteile aufweisen, wie zum Beispiel ein erstes, beispielsweise oberes Dichtungsteil 181 der Dichtung 180, und ein zweites, beispielsweise unteres Dichtungsteil 182 der Dichtung 180. Es sei erwähnt, dass auch die Dichtung 140 derart geteilt sein kann, was aber aus Gründen der Übersichtlichkeit in Figur 1 nicht gezeigt ist. Die Dichtungsteile 181 und 182 können horizontal in der Mitte der Dichtungsöffnungen 185 geteilt sein. Das heißt, dass die Teilung zwischen dem ersten, Dichtungsteil 181 und dem zweiten Dichtungsteil 182 in Abhängigkeit der Durchmesser der Dichtungsöffnungen 185 erfolgen kann, was bei unterschiedlichen Durchmessern der Dichtungsöffnungen 185 zu einer unebenen Teilungsfläche der Dichtungsteile führt. Die Unebenheit der Teilungsfläche wird in Figur 1 durch die Trennungsfläche 186 dargestellt und verdeutlicht den Verlauf der Trennung zwischen erstem Dichtungsteil 181 und zweitem Dichtungsteil 182. Eine derartig unebene Teilungsfläche 186 ergibt sich dadurch, dass die Dichtungsöffnungen 185 mit ihren oberen Kanten auf einer Linie liegen. Mit anderen Worten liegen die zur Halterung 120 gewandten Ränder der Dichtungsöffnung 185, also der obere Abschluss der Dichtungsöffnung 185, in einer Ebene. Gemäß Ausführungsformen der Erfindung, wird die Ebene im Wesentlichen durch die Halterung definiert.

Die oben beschriebene Teilung der Dichtung und die Anordnung der Dichtungsöffnungen ist individuell auf den jeweiligen Fall abgestimmt in das Dichtungsmaterial geformt. Zum Beispiel können die Trennung und die Dichtungsöffnungen mittels Wasserstrahlschneiden in das Dichtmaterial geformt werden. Es können zum Beispiel in das erste und das zweite Dichtungsteil halbschalige Vertiefungen gebildet werden, die beim Zusammenfügen der beiden Dichtungsteile die Dichtungsöffnung bilden.

Durch die spezielle Anordnung der Dichtungsöffnungen 185 in der Dichtung 180, sodass deren zur Halterung 120 weisende Ränder in einer zur Halterung 120 parallelen Ebene liegen, ist es möglich, dass die einzelnen durch die Dichtungsöffnungen 185 hindurchtretenden Kabel an die Halterung 120 gezogen und eben oder glatt an dieser aufliegen, ohne dass sie gebogen werden. Diese spezielle Teilung, die eben nicht mittig durch die Dichtung, sondern mittig durch die Dichtungsöffnungen läuft, ermöglicht eine zentrische Positionierung der Kabel in den Dichtungsöffnungen. Die zentrische Positionierung wiederum erlaubt die Trennung der Funktion Halten der Kabel von der Funktion Dichten. Infolgedessen kann in der erfindungsgemäßen Ausgestaltung des Durchgangsabschlusses leichtes Dichtungsmaterial verwendet werden, da die Dichtung keine Haltefunktion übernimmt. Die Haltefunktion wird in den Ausführungsformen der Erfindung durch die Halterung wahrgenommen.

Da bei der erfindungsgemäßen Ausgestaltung geringe Klemmkräfte für das Komprimieren der Dichtungen 140 und 180 erforderlich sind, sind das erste Rahmenteil und das zweite Rahmenteil aus dünnwandigen Blechprofilen gestaltet und können durch die flexible Gestaltung der Profilhöhen auch große Klemm- bzw. Dichtflächen abdecken. In einem Beispiel kann eine Breite von bis zu 500 mm und eine Höhe von über 100 mm abgedeckt werden. Bei größeren Abmessungen kann aus montagetechnischer Sicht eine zusätzliche Fixierstange als Aufnahme der Halterung und der Montagezwischenplatte vorgesehen sein.

Typischerweise ist die Halterung 120 derart geformt, dass sie mindestens einen Finger 125 aufweist, der ein koaxiales Befestigen eines Kabelstranges, zum Beispiel mittels Kabelbindern, ermöglicht. In einer Ausführungsform erstreckt sich der Finger 125 parallel zur Längsachse der entsprechenden Dichtungsöffnung. Typischerweise kann die Halterung, wie in den Figuren gezeigt, mehrere zueinander parallele Finger aufweisen, wobei zum Beispiel je ein Finger für eine Dichtungsöffnung bereitgestellt wird. Vorzugsweise sind die Finger im Wesentlichen T-förmig und weisen jeweils ein breites, freies Ende und einen im Vergleich dazu schmaleren Bereich in Richtung zum festen Ende des Fingers auf.

Durch die Verwendung des Kabelkanals nach einer Ausführungsform der Erfindung ist es möglich, eine Leitungsverlegung ohne Durchstecken der Leitungen durch zum Beispiel eine Flanschplatte, und gleichzeitig eine ausreichende Abdichtung des Kabelkanals zu realisieren.

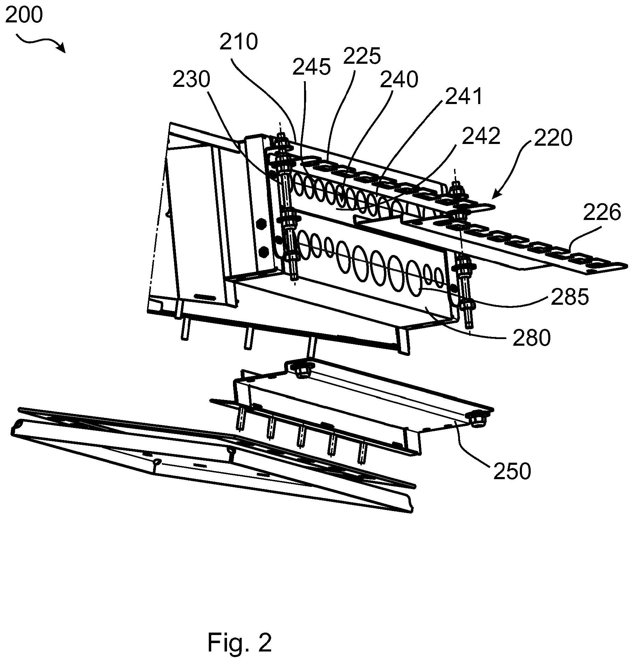

Figur 2 zeigt eine Montagedarstellung eines Durchgangsabschlusses 200 nach einer Ausführungsform der Erfindung. Bei der Montagedarstellung der Figur 2 werden weitere Vorteile der erfindungsgemäßen Ausgestaltung sichtbar. Die Montage des Durchgangsabschlusses 200 kann zum Beispiel mittels Schichtmontage durchgeführt werden. Dabei wird beispielsweise zuerst die Halterung 220 mit den Fingern 225 entlang der Fixierstange 230 geführt und am ersten Rahmenteil 210 des Dichtungspressrahmens befestigt. Danach wird ein erstes, beispielsweise oberes Dichtungsteil 241 der Dichtung 240 eingelegt, das erste, halbschalige Vertiefungen für die Dichtungsöffnung 245 enthält. Bei einer als Beispiel zu verstehenden Montage von unten im Unterflurbereich eines Schienenfahrzeugs befindet sich der Durchgangsabschluss nun in einem geöffneten Zustand mit einer in Längsrichtung des Wagenkastens durchgängigen Öffnung. Die Kabel können damit in die halbschalenartigen Vertiefungen des ersten Dichtungsteils 241 gelegt werden, bevor ein zweites Dichtungsteil 242 die Dichtung 240 komplettiert und abschließt. Das zweite Dichtungsteil 242 weist entsprechende, halbschalenartige Vertiefungen auf, die für die Aufnahme der Kabel angepasst sind. Die Teilung der beiden Dichtungsteile kann so geformt sein, wie oben im Detail beschrieben wurde. Durch diese erfindungsgemäße Ausgestaltung und Montage des Durchgangsabschlusses ist es nicht, wie im Stand der Technik, nötig, die vorkonfektionierten und steifen Kabel durch einen Dichtungspressrahmen für eine Pressdichtung zu fädeln, sondern die Kabel können bequem von unten in den Kabelkanal eingelegt werden.

Bei der in Figur 2 gezeigten Ausführungsform wird nach der Montage der ersten Halterung 220 und der ersten Dichtung 140 eine Montagezwischenplatte und/oder eine zweite Halterung 226 von unten über die Fixierstangen 230 eingelegt. Nach der Montage der gesamten Dichtung inklusive der zweiten Dichtung 280, die mit ähnlichen Schritten montiert wird, wie die erste Dichtung 240, wird das zweite, beispielsweise untere Rahmenteil 250 montiert und so der gesamte Aufbau komprimiert. Danach kann, wie in Figur 1 gezeigt, eine Verblendung hinzugefügt werden. Die Komprimierung kann zum Beispiel über die Positionierung des zweiten Pressrahmenteils 250 entlang der Fixierstange 230 erfolgen.

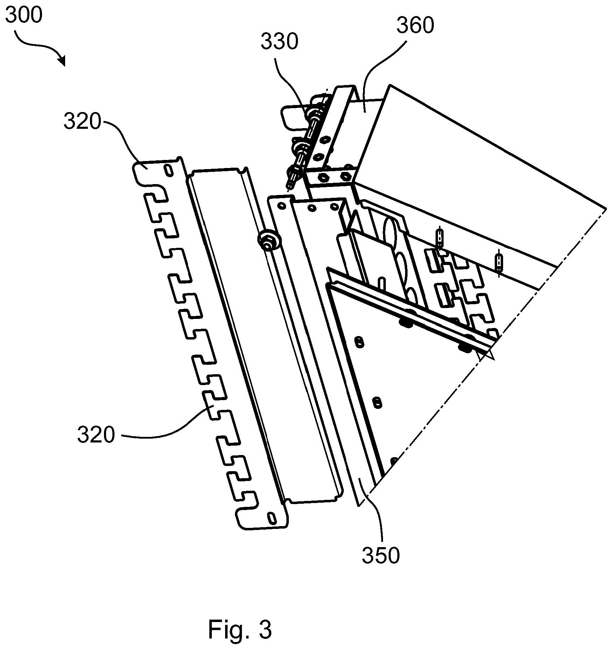

Figur 3 zeigt einen Ausschnitt des zweiten Rahmenteils 350. Wie man in dieser Ansicht sehen kann, kann das zweite Rahmenteil 350 ebenfalls durch die Fixierstangen 330 geführt und nach der Montage der Halterung 320 und der Dichtung befestigt werden. Die Halterung 320 umfasst Finger 325, wie oben beschrieben. Zusätzlich zeigt die Figur 3 noch ein Seitenteil 360 als Verblendung.

Bei der Verwendung als Kabelkanaleingang ist der teilbare Dichtungspressrahmen des Durchgangabschlusses mit den Dichtungen gemäß Ausführungsformen der Erfindung so gestaltet, dass, zum Zweck einer vereinfachten Montage von vorkonfektionierten Leitungen, das zweite Rahmenteil 350 auch als Aufnahme für die Kabelabdeckung oder den Gehäusedeckel des Kabelkanals mit den dazu gehörenden Befestigungselementen dient. Somit wird eine offene Montagefreigängigkeit für die Leitungsverlegung gewährleistet.

Durch die oben beschriebenen Ausführungsformen ist eine dichtere Packung der Kabelbündel im Bereich des Kabeleintritts möglich, da kein zusätzliches Montagewerkzeug angesetzt werden muss, um die Komprimierung und die Halterung der Kabel zu realisieren. Somit ist auch die Lage der Halterung und der Dichtungsöffnungen nur von der zu verlegenden Leitungsmenge (oder Bundgröße) abhängig, und nicht von zusätzlich zu beachtenden Montageabständen, wie das beim Stand der Technik der Fall ist.

Damit erlaubt der Kabelkanal nach Ausführungsformen der Erfindung eine leichte Montage und eine Gewichtsreduktion des Durchgangsabschlusses.

Gemäß einer Ausführungsform wird ein Schienenfahrzeug mit einem im Unterflurbereich montierten Kabelkanal gemäß den hierin beschriebenen Ausführungsformen bereitgestellt.

Die vorstehend beschriebenen Ausführungsformen können beliebig miteinander kombiniert werden. Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Erfindung abzuweichen. Die nachfolgenden Ansprüche stellen einen ersten, nicht bindenden Versuch dar, die Erfindung allgemein zu definieren.

### Bezugszeichenliste

- 100: Durchgangsabschluss
- 110: erstes Rahmenteil
- 120: Halterung
- 125: Finger
- 130: Fixierstange
- 135: Montagezwischenplatte
- 140: Dichtung
- 145: Dichtungsöffnungen
- 150: zweites Rahmenteil
- 170: Kabelkanalgehäusedeckel
- 180: zweite Dichtung
- 181: erstes Dichtungsteil
- 182: zweites Dichtungsteil
- 186: Trennungsfläche
- 190: Verblendungen
- 200: Durchgangsabschluss
- 210: ersten Rahmenteil
- 220: Halterung
- 225: Finger
- 226: zweite Halterung
- 230: Fixierstange
- 240: Dichtung
- 241: erstes Dichtungsteil
- 242: zweites Dichtungsteil
- 245: Dichtungsöffnungen
- 250: zweites Rahmenteil
- 280: zweite Dichtung
- 285: Dichtungsöffnung
- 300: Durchgangsabschluss
- 320: Halterung
- 325: Finger
- 330: Fixierstange
- 350: zweites Dichtungspressrahmenteil
- 360: Seitenteil

## Patentansprüche

1. Kabelkanal mit wenigsten einem Durchgangsabschluss (100; 200) für wenigstens ein Kabel an einem offenen Ende des Kabelkanals, wobei der Durchgangsabschluss (100; 200) umfasst:
einen Dichtungspressrahmen (110; 150);
eine am Dichtungspressrahmen (110; 150) befestigbare Halterung (120; 220; 320) zum Fixieren des Kabels am Durchgangsabschluss (100; 200); und
eine vom Dichtungspressrahmen (110; 150) gehaltene Dichtung (140; 180; 240; 280) aus einem bevorzugt weichen Dichtungsmaterial mit mindestens einer Dichtungsöffnung (145; 185; 245; 285), durch welche das Kabel hindurch treten kann und welche den Innenraum des Kabelkanals an dessen offenem Ende abdichtet, wobei die Halterung (120; 220; 320) eine Fixierung des Kabels relativ zu der Dichtungsöffnung (145; 185; 245; 285) gestattet.

2. Kabelkanal nach Anspruch 1, wobei der Durchgangsabschluss (100; 200) weiterhin eine oder zwei Fixierstangen (130; 230; 330) umfasst, die am Dichtungspressrahmen (110; 150) befestigt sind und als Führung für die Halterung (120; 220; 320) dienen.

3. Kabelkanal nach Anspruch 2, wobei die Position der Halterung (120; 220; 320) relativ zum Dichtungspressrahmen (110; 150) mittels der Fixierstange (130; 230; 330) oder der Fixierstangen (130; 230; 330) bevorzugt stufenlos einstellbar ist.

4. Kabelkanal nach einem der vorangehenden Ansprüche, wobei die Halterung (120; 220; 320) mindestens einen Finger (125; 225; 325) umfasst, der sich parallel zu der Längsachse der Dichtungsöffnung (145; 185; 245; 285) erstreckt und an dem das Kabel koaxial zu der ihm zugeordneten Dichtungsöffnung (145; 185; 245; 285) festlegbar ist.

5. Kabelkanal nach einem der vorangehenden Ansprüche, wobei die Dichtung (140; 180; 240; 280) mindestens zwei Dichtungsöffnungen (145; 185) mit unterschiedlichen Durchmessern umfasst, und wobei die zur Halterung (120; 220; 320) weisende Seiten der mindestens zwei Dichtungsöffnungen (145; 185) im Wesentlichen in einer durch die Halterung definierten gemeinsamen Ebene liegen.

6. Kabelkanal nach einem der vorangehenden Ansprüche, wobei der Dichtungspressrahmen (110; 150; 210; 250) zweiteilig ist und ein erstes Rahmenteil (110; 210) und ein zweites Rahmenteil (150; 250; 350) aufweist.

7. Kabelkanal nach einem der vorangehenden Ansprüche, wobei die Dichtung (140; 180; 240; 280) zweiteilig ist und ein erstes Dichtungsteil (181) und ein zweites Dichtungsteil (182) umfasst, wobei die Dichtungsöffnung (145; 185) oder die Dichtungsöffnungen (145; 185) durch etwa halbschalige Vertiefungen in dem ersten und zweiten Dichtungsteil (181, 182) ausgebildet sind, die beim Zusammenfügen der beiden Dichtungsteile (181, 182) jeweils eine Dichtungsöffnung (145; 185) bilden.

8. Kabelkanal nach einem der Ansprüche 6 bis 7, wobei die Rahmenteile (110; 150; 210; 250) mittels der einen oder zwei Fixierstangen (130; 230; 330) zusammengehalten und relativ zueinander bewegbar sind, um die Dichtung (140; 180; 240; 280) zwischen ihnen zu komprimieren.

9. Kabelkanal nach einem der vorangehenden Ansprüche, wobei das Dichtungsmaterial eine Dichte von ungefähr 200 kg/m³ bis ungefähr 350 kg/m³, bevorzugt von ungefähr 200 kg/m³ bis ungefähr 250 kg/m³ aufweist.

10. Kabelkanal nach einem der vorangehenden Ansprüche, wobei das Dichtungsmaterial einen Kompressionswiderstand von ungefähr 30 kPa bis ungefähr 91 kPa, bevorzugt von ungefähr 30 kPa bis ungefähr 65 kPa aufweist.

11. Kabelkanal nach einem der Ansprüche 2 bis 10, wobei die Fixierstange (130; 230; 330) als Gewindestange ausgebildet ist.

12. Bausatz für einen Durchgangsabschluss (100; 200) eines Kabelkanals gemäß Anspruch 1, umfassend mindestens die folgenden Elemente:
den Dichtungspressrahmen (110; 150; 210; 250), der an ein offenes Ende des Kabelkanals montierbar oder integral mit diesem verbunden ist;
die Dichtung (140; 180; 240; 280), die zweischalig ausgebildet ist und aus einem bevorzugt weichen Dichtungsmaterial zum Einsetzen in den Dichtungspressrahmen (110; 150) besteht, um dort im zusammengesetzten Zustand mindestens eine Dichtungsöffnung (145; 185; 245; 285) zu bilden, durch welche ein Kabel hindurchtreten kann, wobei die Dichtung (140; 180; 240; 280) das offene Ende des Kabelkanals abdichtet;
mindestens eine am Dichtungspressrahmen (110; 150) des Durchgangsabschlusses (100; 200) montierbare Fixierstange (130; 230; 330); und
die am Dichtungspressrahmen (110; 150) befestigbare Halterung (120; 220; 320) zum Fixieren des Kabels am Durchgangsabschluss (100; 200) relativ zu der Dichtungsöffnung (145; 185; 245; 285), wobei die Halterung mittels der Fixierstange (130; 230; 330) am Dichtungspressrahmen (110; 150) befestigbar ist und wobei die Fixierstange (130; 230; 330) eine bevorzugt stufenlose Einstellung der Position der Halterung (120; 220; 320) relativ zum Dichtungspressrahmen (110; 150) gestattet.

13. Bausatz nach Anspruch 12, wobei die Elemente des Bausatzes zumindest eines der in den Ansprüchen 4 bis 11 beschriebene Merkmale aufweisen.

14. Verfahren zum Verlegen von Kabeln in einem einseitig offenen Kabelkanal, an dessen einem Ende ein Durchgangsabschluss (100; 200) befestigt ist, der einen Dichtungspressrahmen (110; 150; 210; 250) mit einem am Kabelkanal festgelegten ersten Rahmenteil (110) und zumindest eine Fixierstange (130; 230; 330) aufweist, wobei das Verfahren umfasst:
Montieren einer ersten Halterung (120; 220) an der Fixierstange (130; 230; 330);
Einlegen eines ersten Dichtungsteils (241) mit etwa halbschaligen Vertiefungen in den Dichtungspressrahmen (110; 150; 210; 250);
Einlegen der Kabel in die etwa halbschaligen Vertiefungen des ersten Dichtungsteils (241);
Befestigen der Kabel an der ersten Halterung (120; 220);
Einlegen eines zweiten Dichtungsteils (242) mit etwa halbschaligen Vertiefungen in den Dichtungspressrahmen (110; 150; 210; 250), wobei das erste und zweite Dichtungsteil (241, 242) mit ihren jeweils etwa halbschaligen Vertiefungen zusammen eine erste Dichtung mit Duchgangsöffnungen (145; 185; 245; 285) bilden, durch welche die Kabel hindurchtreten; und
Montieren eines zweiten Rahmenteils (150; 250) des Dichtungspressrahmens (110; 150; 210; 250) an der Fixierstange (130; 230; 330) und Zusammenpressen der Dichtungsteile (241, 242) zwischen dem ersten und zweiten Rahmenteil durch relatives Bewegen der beiden Rahmenteile zueinander mittels der Fixierstange zum Abdichten des offenen Endes des Kabelkanals.

15. Verfahren nach Anspruch 14, wobei nach dem Einlegen des zweiten Dichtungsteils (242) eine zweite Halterung (320) an der Fixierstange (130; 230; 330) montiert wird, welche die erste Dichtung gegen das erste Rahmenteil presst, wobei das Verfahren vor dem Montieren des zweiten Rahmenteils (150; 250) folgendes umfasst:
Einlegen eines ersten Dichtungsteils (241) einer zweiten Dichtung mit etwa halbschaligen Vertiefungen in den Dichtungspressrahmen (110; 150; 210; 250);
Einlegen weiterer Kabel in die etwa halbschaligen Vertiefungen des ersten Dichtungsteils (241);
Befestigen der weiteren Kabel an der zweiten Halterung (120; 220);
Einlegen eines zweiten Dichtungsteils (242) der zweiten Dichtung mit etwa halbschaligen Vertiefungen in den Dichtungspressrahmen (110; 150; 210; 250), wobei das erste und zweite Dichtungsteil (241, 242) mit ihren jeweils etwa halbschaligen Vertiefungen zusammen die zweite Dichtung mit Duchgangsöffnungen (145; 185; 245; 285) bilden, durch welche die weiteren Kabel hindurchtreten; und
Zusammenpressen der zweiten Dichtung durch Pressen des zweiten Rahmenteils gegen die zweite Halterung.

## Claims

1. Cable duct having at least one feed-through terminal (100; 200) for at least one cable at an open end of the cable duct, wherein the feed-through terminal (100; 200) comprises:
a seal press frame (110; 150);
a support (120; 220; 320), attachable to the seal press frame (110; 150), for fixing the cable at the feed-through terminal (100; 200); and
a seal (140; 180; 240; 280), held by the seal press frame (110; 150), made from a preferably soft sealing material having at least one seal aperture (145; 185; 245; 285), through which the cable can pass and which seals the inner space of the cable duct at its open end, wherein the support (120; 220; 320) allows a fixing of the cable relative to the seal aperture (145; 185; 245; 285).

2. Cable duct according to claim 1, wherein the feed-through terminal (100; 200) further comprises one or two fixing rods (130; 230; 330), which are attached to the seal press frame (110; 150) and function as guides for the support (120; 220; 320).

3. Cable duct according to claim 2, wherein the position of the support (120; 220; 320) relative to the seal press frame (110; 150) is preferably steplessly adjustable by means of the fixing rod(s) (130; 230; 330).

4. Cable duct according to one of the preceding claims, wherein the support (120; 220; 320) comprises at least one finger (125; 225; 325) which extends parallel to the longitudinal axis of the seal aperture (145; 185; 245; 285) and to which the cable can be coaxially attached at the seal aperture (145; 185; 245; 285) assigned to it.

5. Cable duct according to one of the preceding claims, wherein the seal (140; 180; 240; 280) comprises at least two seal apertures (145; 185) with different diameters, and wherein the sides of the at least two seal apertures (145; 185) facing the support (120; 220; 320) lie substantially in a common plane defined by the support.

6. Cable duct according to one of the preceding claims, wherein the seal press frame (110; 150; 210; 250) is in two parts and has a first frame part (110; 210) and a second frame part (150; 250; 350).

7. Cable duct according to one of the preceding claims, wherein the seal (140; 180; 240; 280) is in two parts and comprises a first sealing part (181) and a second sealing part (182), wherein the seal aperture(s) (145; 185) are formed by approximately half-shell recesses in the first and second sealing parts (181, 182) which, due to the joining of the two sealing parts (181, 182), respectively form one sealing aperture (145; 185).

8. Cable duct according to one of claims 6 to 7, wherein the frame parts (110; 150; 210; 250) are held together by means of one or two fixing rods (130; 230; 330) and are movable relative to each other in order to compress the seal (140; 180; 240; 280) between them.

9. Cable duct according to one of the preceding claims, wherein the sealing material has a density from approximately 200 kg/m³ to approximately 350 kg/m³, preferably from approximately 200 kg/m³ to approximately 250 kg/m³.

10. Cable duct according to one of the preceding claims, wherein the sealing material has a compression resistance from approximately 30 kPa to approximately 91 kPa, preferably from approximately 30 kPa to approximately 65 kPa.

11. Cable duct according to one of claims 2 to 10, wherein the fixing rods (130; 230; 330) are designed as threaded rods.

12. Kit for a feed-through terminal (100; 200) of a cable duct according to claim 1, comprising at least the following elements:
the seal press frame (110; 150; 210; 250), which can be mounted on an open end of the cable duct or is connected integrally to the same;
the seal (140; 180; 240; 280), which is designed as two shells and preferably consists of a soft sealing material for insertion into the seal press frame (110; 150) in order to form in the assembled state at least one seal aperture (145; 185; 245; 285) through which a cable can pass, wherein the seal (140; 180; 240; 280) seals the open end of the cable duct;
at least one fixing rod (130; 230; 330) mountable at the seal press frame (100; 150) of the feed-through terminal (100; 200); and
the support (120; 220; 320), attachable to the seal press frame (100; 150) for fixing the cable at the feed-through terminal (100; 200) relative to the seal aperture (145; 185; 245; 285), wherein the support can be attached to the seal press frame (110; 150) by means of the fixing rod (130; 230; 330), and wherein the fixing rod (130; 230; 330) allows a preferably stepless adjustment of the position of the support (120; 220; 320) relative to the seal press frame (110; 150).

13. Kit according to claim 12, wherein the elements of the kit have at least one of the features described in claims 4 to 11.

14. Method for laying cables in a cable duct open on one side, at one end of which a feed-through terminal (100; 200) is fastened which has a seal press frame (110; 150; 210; 250) having a first frame part (110) attached to the cable duct and at least one fixing rod (130; 230; 330), wherein the method comprises:
mounting a first support (120; 220) at the fixing rod (130; 230; 330);
inserting a first sealing part (241) with approximately half-shell recesses into the seal press frame (110; 150; 210; 250);
inserting the cables into the approximately half-shell recesses of the first sealing part (241);
attaching the cables to the first support (120; 220);
inserting a second sealing part (242) with approximately half-shell recesses into the seal press frame (110; 150; 210; 250), wherein the first and second sealing parts (241, 242) with their respective approximately half-shell recesses together form a first seal with through apertures (145; 185; 245; 285) through which the cables pass; and
mounting a second frame part (150; 250) of the seal press frame (110; 150; 210; 250) at the fixing rod (130; 230; 330) and compressing the sealing parts (241, 242) between the first and second frame parts by a relative movement of the two frame parts toward each other by means of the fixing rod to seal the open end of the cable duct.

15. Method according to claim 14, wherein after the insertion of the second sealing part (242), a second support (320) is mounted on the fixing rod (130; 230; 330), which presses the first seal against the first frame part, wherein the method prior to the mounting of the second frame part (150; 250) further comprises:
inserting a first sealing part (241) of a second seal with approximately half-shell recesses into the seal press frame (110; 150; 210; 250);
inserting additional cables into the approximately half-shell recesses of the first sealing part (241);
attaching the additional cables to the second support (120; 220);
inserting a second sealing part (242) of the second seal with approximately half-shell recesses into the seal press frame (110; 150; 210; 250), wherein the first and second sealing parts (241, 242) with their respective approximately half-shell recesses together form the second seal with through apertures (145; 185; 245; 285) through which the additional cables pass; and
compressing the second seal by pressing the second frame part against the second support.

## Revendications

1. Canal de câbles comportant au moins un passage de paroi (100 ; 200) destiné à au moins un câble au niveau d'une extrémité ouverte du canal de câbles, le passage de paroi (100 ; 200) comprenant :
un cadre de presse d'étanchéité (110 ; 150) ;
un dispositif de maintien (120 ; 220 ; 320) apte à être fixé au cadre de presse d'étanchéité (110 ; 150) et permettant de fixer le câble au passage de paroi (100 ; 200) ; et
un joint d'étanchéité (140 ; 180 ; 240 ; 280) qui est maintenu par le cadre de presse d'étanchéité (110 ; 150) et qui est constitué d'un matériau d'étanchéité de préférence souple, comportant au moins une ouverture d'étanchéité (145 ; 185 ; 245 ; 285) à travers laquelle peut passer le câble et laquelle étanchéifie l'espace intérieur du canal de câbles au niveau de l'extrémité ouverte de celui-ci,
le dispositif de maintien (120 ; 220 ; 320) permettant la fixation du câble par rapport à l'ouverture d'étanchéité (145 ; 185 ; 245 ; 285).

2. Canal de câbles selon la revendication 1, dans lequel le passage de paroi (100 ; 200) comprend en outre une ou deux tiges de fixation (130 ; 230 ; 330) qui sont fixées au cadre de presse d'étanchéité (110 ; 150) et servent de guidages pour le dispositif de maintien (120 ; 220 ; 320).

3. Canal de câbles selon la revendication 2, dans lequel la position du dispositif de maintien (120 ; 220 ; 320) par rapport au cadre de presse d'étanchéité (110 ; 150) est réglable de préférence en continu au moyen de la tige de fixation (130 ; 230 ; 330) ou des tiges de fixation (130 ; 230 ; 330).

4. Canal de câbles selon l'une des revendications précédentes, dans lequel le dispositif de maintien (120 ; 220 ; 320) comprend au moins un doigt (125 ; 225 ; 325) qui s'étend parallèlement à l'axe longitudinal de l'ouverture d'étanchéité (145 ; 185 ; 245 ; 285) et auquel le câble peut être fixé coaxialement à l'ouverture d'étanchéité (145 ; 185 ; 245 ; 285) qui lui est associée.

5. Canal de câbles selon l'une des revendications précédentes, dans lequel le joint d'étanchéité (140 ; 180 ; 240 ; 280) comprend au moins deux ouvertures d'étanchéité (145 ; 185) de diamètres différents, et dans lequel les côtés des au moins deux ouvertures d'étanchéité (145 ; 185) tournés vers le dispositif de maintien (120 ; 220 ; 320) se trouvent sensiblement dans un plan commun défini par le dispositif de maintien.

6. Canal de câbles selon l'une des revendications précédentes, dans lequel le cadre de presse d'étanchéité (110 ; 150 ; 210 ; 250) est en deux parties et présente une première partie de cadre (110 ; 210) et une seconde partie de cadre (150 ; 250 ; 350).

7. Canal de câbles selon l'une des revendications précédentes, dans lequel le joint d'étanchéité (140 ; 180 ; 240 ; 280) est en deux parties et comprend une première partie d'étanchéité (181) et une seconde partie d'étanchéité (182), l'ouverture d'étanchéité (145 ; 185) ou les ouvertures d'étanchéité (145 ; 185) étant réalisées par des renfoncements approximativement en demi-coques dans les première et seconde parties d'étanchéité (181, 182), lesquels renfoncements forment chacun une ouverture d'étanchéité (145 ; 185) lors de l'assemblage des deux parties d'étanchéité (181, 182).

8. Canal de câbles selon l'une des revendications 6 à 7, dans lequel les parties de cadre (110 ; 150 ; 210 ; 250) sont maintenues ensemble et sont mobiles l'une par rapport à l'autre au moyen de la ou des deux tiges de fixation (130 ; 230 ; 330) afin de compresser le joint d'étanchéité (140 ; 180 ; 240 ; 280) entre elles.

9. Canal de câbles selon l'une des revendications précédentes, dans lequel le matériau d'étanchéité présente une épaisseur d'environ 200 kg/m³ à environ 350 kg/m³, de préférence d'environ 200 kg/m³ à environ 250 kg/m³.

10. Canal de câbles selon l'une des revendications précédentes, dans lequel le matériau d'étanchéité présente une résistance à la compression d'environ 30 kPa à environ 91 kPa, de préférence d'environ 30 kPa à environ 65 kPa.

11. Canal de câbles selon l'une des revendications 2 à 10, dans lequel la tige de fixation (130 ; 230 ; 330) est réalisée sous forme de tige filetée.

12. Kit destiné à un passage de paroi (100 ; 200) d'un canal de câbles selon la revendication 1, comprenant au moins les éléments suivants :
le cadre de presse d'étanchéité (110 ; 150 ; 210 ; 250) qui est apte à être monté au niveau d'une extrémité ouverte du canal de câbles ou qui est relié d'une seule pièce avec celui-ci ;
le joint d'étanchéité (140 ; 180 ; 240 ; 280) qui est formé de deux coques et qui est constitué d'un matériau d'étanchéité de préférence souple permettant l'introduction dans le cadre de presse d'étanchéité (110 ; 150), afin d'y former, à l'état assemblé, au moins une ouverture d'étanchéité (145 ; 185 ; 245 ; 285) à travers laquelle un câble peut passer, le joint d'étanchéité (140 ; 180 ; 240 ; 280) étanchéifiant l'extrémité ouverte du canal de câbles ;
au moins une tige de fixation (130 ; 230 ; 330) qui peut être montée sur le cadre de presse d'étanchéité (110 ; 150) du passage de paroi (100 ; 200) ; et
le dispositif de maintien (120 ; 220 ; 320) qui peut être fixé au cadre de presse d'étanchéité (110 ; 150) afin de fixer le câble au passage de paroi (100 ; 200) par rapport à l'ouverture d'étanchéité (145 ; 185 ; 245 ; 285), le dispositif de maintien étant apte à être fixé au cadre de presse d'étanchéité (110 ; 150) au moyen de la tige de fixation (130 ; 230 ; 330) et la tige de fixation (130 ; 230 ; 330) permettant un réglage de préférence en continu de la position du dispositif de maintien (120 ; 220 ; 320) par rapport au cadre de presse d'étanchéité (110 ; 150).

13. Kit selon la revendication 12, dans lequel les éléments du kit présentent au moins l'une des caractéristiques décrites dans les revendications 4 à 11.

14. Procédé de pose de câbles dans un canal de câbles ouvert d'un côté, un passage de paroi (100 ; 200) étant fixé au niveau de l'extrémité dudit canal de câbles, le passage de paroi présentant un cadre de presse d'étanchéité (110 ; 150 ; 210 ; 250) comportant une première partie de cadre (110) fixée au canal de câbles et au moins une tige de fixation (130 ; 230 ; 330), le procédé comprenant :
le montage d'un premier dispositif de maintien (120 ; 220) sur la tige de fixation (130 ; 230 ; 330) ;
l'insertion d'une première partie d'étanchéité (241) comportant des renfoncements approximativement en demi-coques dans le cadre de presse d'étanchéité (110 ; 150 ; 210 ; 250) ;
l'insertion des câbles dans les renfoncements approximativement en demi-coques de la première partie d'étanchéité (241) ;
la fixation des câbles au premier dispositif de maintien (120 ; 220) ;
l'insertion d'une seconde partie d'étanchéité (242) comportant des renfoncements approximativement en demi-coques dans le cadre de presse d'étanchéité (110 ; 150 ; 210 ; 250), les première et seconde parties d'étanchéité (241, 242) formant ensemble, avec leurs renfoncements approximativement en demi-coques, un premier joint d'étanchéité comportant des ouvertures d'étanchéité (145 ; 185 ; 245 ; 285) à travers lesquelles passent les câbles ; et
le montage d'une seconde partie de cadre (150 ; 250) du cadre de presse d'étanchéité (110 ; 150 ; 210 ; 250) sur la tige de fixation (130 ; 230 ; 330) et la compression des parties d'étanchéité (241, 242) entre les première et seconde parties de cadre par déplacement relatif des deux parties de cadre l'une par rapport à l'autre au moyen de la tige de fixation afin d'étanchéifier l'extrémité ouverte du canal de câbles.

15. Procédé selon la revendication 14, dans lequel, après l'insertion de la seconde partie d'étanchéité (242), un second dispositif de maintien (320) est monté sur la tige de fixation (130 ; 230 ; 330), lequel second dispositif de maintien presse le premier joint d'étanchéité contre la première partie de cadre, le procédé comprenant les étapes suivantes avant le montage de la seconde partie de cadre (150 ; 250) :
l'insertion d'une première partie d'étanchéité (241) d'un second joint d'étanchéité comportant des renfoncements approximativement en demi-coques dans le cadre de presse d'étanchéité (110 ; 150 ; 210 ; 250) ;
l'insertion d'autres câbles dans les renfoncements approximativement en demi-coques de la première partie d'étanchéité (241) ;
la fixation des autres câbles au second dispositif de maintien (120 ; 220) ;
l'insertion d'une seconde partie d'étanchéité (242) du second joint d'étanchéité comportant des renfoncements approximativement en demi-coques dans le cadre de presse d'étanchéité (110 ; 150 ; 210 ; 250), les première et seconde parties d'étanchéité (241, 242) formant ensemble, avec leurs renfoncements approximativement en demi-coques, le second joint d'étanchéité comportant des ouvertures d'étanchéité (145 ; 185 ; 245 ; 285) à travers lesquelles passent les autres câbles ; et
la compression du second joint d'étanchéité par pressage de la seconde partie du cadre contre le second dispositif de maintien.
